Europäisches Patentamt

European Patent Office

Office européen des brevets

(11) Veröffentlichungsnummer: **0 103 708**
**B1**

## (12) EUROPÄISCHE PATENTSCHRIFT

(45) Veröffentlichungstag der Patentschrift:
04.12.85

(51) Int. Cl.⁴: **B 01 J 8/44**, B 05 B 1/26

(21) Anmeldenummer: 83107424.0

(22) Anmeldetag: 28.07.83

(54) Ringspaltdüse und deren Verwendung in einem Fliessbetttrockner.

(30) Priorität: 30.08.82 CH 5134/82

(43) Veröffentlichungstag der Anmeldung:
28.03.84 Patentblatt 84/13

(45) Bekanntmachung des Hinweises auf die Patenterteilung:
04.12.85 Patentblatt 85/49

(84) Benannte Vertragsstaaten:
BE DE FR GB IT NL

(56) Entgegenhaltungen:
DE - A - 2 811 900
US - A - 4 309 948

(73) Patentinhaber: Sulzer-Escher Wyss GmbH, Escher Wyss-Strasse Postfach 1380, D-7980 Ravensburg (DE)

(72) Erfinder: Sedlacek, Franz, Lammstrasse 15, D-7987 Weingarten (DE)

(74) Vertreter: Kubr, Václav, Dr. et al, c/o Sulzer - Escher Wyss AG Patentabteilung Postfach, CH-8023 Zürich (CH)

## Beschreibung

Die Erfindung betrifft eine Ringspaltdüse an einem Boden zum Verteilen eines strömenden Mediums über diesem Boden, welche einen durch den Boden hindurchführenden axialen Kanal aufweist, welcher mit einer Kappe unter Freilassung eines Ringspalts zwischen der Kappe und dem Boden überdeckt ist, wobei die Kappe mittels eines durch den Kanal hindurch und koaxial zu ihm geführten, in einer in Stromrichtung des Mediums am Anfang des Kanals angebrachten Halterung befestigten Verbindungsteiles gehalten ist, wodurch ein Strömungsraum gebildet ist, in welchem der im Kanalbereich axial verlaufende Strom des Mediums in einem Umlenkraum umgelenkt wird und durch den Ringspalt herausströmt, wobei alle den Strömungsraum begrenzenden Wände so gezogen sind, daß der Querschnitt der durchströmten Fläche des ringartigen Strömungsraums in Richtung des Stromes des Mediums zu der Austrittskante des Ringspalts hin mindestens im Umlenkraum des Strömungsraumes beginnend, kontinuierlich abnimmt.

Solche, beispielsweise in GB 2 015 377 beschriebene Ringspaltdüsen werden beispielsweise in Fließbetttrocknern verwendet und dienen zur Einleitung eines Mediums, welches das in den Fließbetttrockner eingebrachte körnige Produkt in der Schwebe hält. Durch die besondere Ausbildung dieser Ringspaltdüse wird das einströmende Medium so auf den Boden des Fließbetttrockners gerichtet, daß sich das Produkt nicht auf dem Boden des Fließbetttrockners absetzen kann.

Nachteilig ist bei solchen vorbekannten Ringspaltdüsen jedoch, daß bei Abstellen des Mediumstromes das im Fließbetttrockner befindliche Produkt in die Düsen hineinfließen kann. Da die Umlenkung des Mediumstromes in diesen Ringspaltdüsen höchstens 90° beträgt, oder sogar knapp darunter liegt, wird der Boden des Trockners noch nicht in idealer Weise vom Mediumstrom überstrichen und die Wirkung ist noch nicht optimal. Um die vorbekannten Ringspaltdüsen bei Bedarf zu schließen, muß in der Regel das Oberteil der Düse vom Inneren des Trockners her hineingeschraubt werden und erfordert daher eine komplizierte Manipulation. Vorbekannte Ringspaltdüsen sind zudem nicht auf einfache und kostengünstige Weise herstellbar.

Die Erfindung setzt sich die Aufgabe, die erwähnten Nachteile des Standes der Technik zu vermeiden und insbesondere eine Ringspaltdüse zu schaffen, welche unkompliziert, einfach und kostengünstig herstellbar ist, welche einen Produktrückfluß bei Abstellen des Mediums vermeidet, bei welcher die Strömung um mehr als 90° umlenkbar ist und welche auf einfache Weise schließbar und als Ventil wirksam ist.

Die Erfindung ist dadurch gekennzeichnet, daß der Strömungsraum, d. h. der Kanal und der Umlenkraum durch Wände zwei zueinander komplementär ausgebildeter und ineinander geschachtelter, schalenförmiger Preßlinge begrenzt ist, welche im Bereich einer Bohrung durch den Boden angeordnet sind und zueinander in einer Distanz gehalten sind, wobei der obere Preßling (9) einen größeren Durchmesser als die Bohrung (11) aufweist und der untere Preßling (10) in die Bohrung (11) einsteckbar paßt.

Erfindungsgemäß läßt sich eine solche Ringspaltdüse mit besonderem Vorteil am Boden eines Fließbetttrockners verwenden.

Die Erfindung, sowie zweckmäßige Weiterbildungen derselben, werden anhand der Figuren erläutert. Es zeigt

Fig. 1 ein erstes Beispiel einer Ringspaltdüse im Schnitt,

Fig. 2 ein zweites, besonders strömungsgünstig ausgebildetes Beispiel,

Fig. 3 ein drittes Beispiel einer Ringspaltdüse.

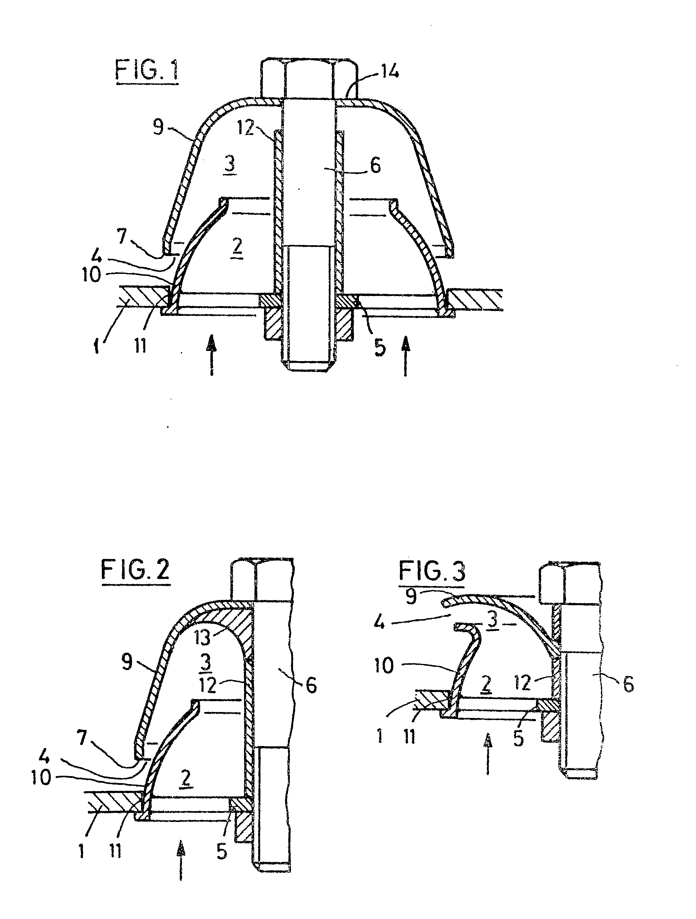

Bei dem in Fig. 1 gezeigten Beispiel ist im Boden 1 eines Fließbetttrockners eine Bohrung 11 zum Einlaß eines Mediums, z. B. Luft oder Dampf, in das Innere des Fließbetttrockners vorgesehen. Durch zwei komplementär ausgebildete und ineinander geschachtelte, schalenförmige Preßlinge 9 und 10 wird dabei ein Strömungsraum gebildet, der aus einem Kanal 2 im Inneren des unteren Preßlings 10 und einem anschließenden Umlenkraum 3 im Inneren des oberen Preßlings 9 besteht. Der obere Preßling 9 hat dabei einen etwas größeren Durchmesser als die Bohrung 11. Der untere Preßling 10 ist zweckmäßigerweise nach Einsteckung in die Bohrung 11 in ihr unverschiebbar befestigt. Bei einer Weiterbildung der Erfindung kann der untere Preßling 10 jedoch auch in der Bohrung 11 verschiebbar eingesteckt sein. Der untere Preßling 10 weist weiterhin eine Halterung 5 auf, mit der mittels eines Verbindungsteiles 6 der obere Preßling 9 gehalten wird.

Zwischen der Austrittskante 7 des oberen Preßlings 9 und dem Boden 1 wird somit ein Ringspalt 4 gebildet, durch den das einströmende Medium mit vergrößerter Geschwindigkeit und unter Umlenkung um mehr als 90° auf den Boden 1 des Fließbetttrockners gerichtet wird und ein Absetzen des verarbeiteten Produktes verhindert. Da die Umlenkung größer ist als bei vorbekannten Ringspaltdüsen, ist eine solche Anordnung besonders wirksam.

Weiterhin wird durch die Ineinanderschachtelung der beiden Preßlinge 9 und 10 und deren komplementäre Ausbildung verhindert, daß bei Abstellen des Mediumstromes das Produkt in den Umlenkraum 3 einfließt und die Zuleitungen verstopft. Dabei wird diese vorteilhafte Wirkung mit einer besonders einfachen Ausbildung der beiden Preßlinge und einer sehr einfachen Montage erreicht. Die beschriebene Ringspaltdüse erlaubt außerdem ein einfaches Schließen und besitzt daher eine Ventilwirkung. Zu diesem Zweck ist der obere Preßling 9 am Verbindungsteil 6 in einer Hülse 12 verschiebbar gelagert, die die Distanz zwischen dem unteren Preßling 10

und dem oberen, den Umlenkraum 3 begrenzenden Preßling 9 bestimmt. Dabei ist die obere Position zum Boden 1 durch einen Anschlag 14 am Verbindungsteil 6 und die unterste Position durch das Aufsetzen der Kante 7 des oberen Preßlings 9 auf dem Boden gegeben sind.

Fig. 2 zeigt ein abgewandeltes Beispiel einer Ringspaltdüse, bei der der obere Teil der Hülse 12 eine gewölbte Wand 13 aufweist, die zur inneren Wand des oberen Preßlings 9 reicht und so einen Abschnitt des Umlenkraumes mitbegrenzt. Auf diese Weise werden besonders günstige Strömungsverhältnisse erreicht.

Bei dem in Fig. 3 wiedergegebenen Beispiel ist das obere Ende des unteren Preßlings 10 nach außen umgebogen, so daß nur die Innenseite des unteren Preßlings 10 den Umlenkraum bildet. Damit wird ein besonders wirksamer Schutz vor einem Rückfluß des Produktes in die Düse gewährleistet. In diesem Beispiel muß der Durchmesser des oberen Preßlings 9 nicht unbedingt größer gewählt werden, als der Durchmesser der Bohrung 11. Dabei kann trotzdem die Düse einwandfrei geschlossen und eine befriedigende Ventilwirkung erreicht werden.

**Patentansprüche**

1. Ringspaltdüse an einem Boden (1) zum Verteilen eines strömenden Mediums über diesem Boden, welche einen durch den Boden hindurchführenden, axialen Kanal (2) aufweist, welcher mit einer Kappe unter Freilassung eines Ringspalts (4) zwischen der Kappe und dem Boden überdeckt ist, wobei die Kappe mittels eines durch den Kanal hindurch und koaxial zu ihm geführten, in einer in Stromrichtng des Mediums am Anfang des Kanals angebrachten Halterung (5) befestigten Verbindungsteiles (6) gehalten ist, wodurch ein Strömungsraum gebildet ist, in welchem der im Kanalbereich axial verlaufende Strom des Mediums in einem Umlenkraum (3) umgelenkt wird und durch den Ringspalt herausströmt, wobei alle den Strömungsraum begrenzenden Wände so gezogen sind, daß der Querschnitt der durchströmten Fläche des ringartigen Strömungsraumes in Richtung des Stromes des Mediums zu der Austrittskante (7) des Ringspalts (4) hin mindestens im Umlenkraum (3) des Strömungsraumes beginnend kontinuierlich abnimmt, dadurch gekennzeichnet, daß der Strömungsraum, d. h. der Kanal (2) und der Umlenkraum (3) durch Wände zwei zueinander komplementär ausgebildeter und ineinander geschachtelter, schalenförmiger Preßlinge (9 und 10) begrenzt ist, welche im Bereich einer Bohrung (11) durch den Boden (1) angeordnet sind und zueinander in einer Distanz gehalten sind, wobei der obere Preßling (9) einen größeren Durchmesser als die Bohrung (11) aufweist und der untere Preßling (10) in die Bohrung (11) einsteckbar paßt.

2. Ringspaltdüse nach Anspruch 1, dadurch gekennzeichnet, daß der untere, den Kanal (2) begrenzende Preßling (10) eine Halterung (5) zum Halten des Verbindungsteiles (6) aufweist.

3. Ringspaltdüse nach Anspruch 2, dadurch gekennzeichnet, daß die Distanz zwischen dem unteren Preßling (10) und dem oberen, den Umlenkraum (3) begrenzenden Preßling (9) mittels einer Hülse (12) gegeben ist, die um den Verbindungsteil (6) und zwischen der Halterung (5) und dem oberen Preßling (9) angeordnet ist.

4. Ringspaltdüse nach Anspruch 3, dadurch gekennzeichnet, daß die Hülse (12) eine gewölbte Wand (13) aufweist, welche vom Verbindungsteil (6) zur inneren Wand des oberen Preßlings (9) reicht und so einen Abschnitt des Umlenkraumes (3) mitbegrenzt.

5. Ringspaltdüse nach Anspruch 1, dadurch gekennzeichnet, daß der untere Preßling (10) nach der Einsteckung in der Bohrung (11) unverschiebbar befestigt ist.

6. Ringspaltdüse nach Anspruch 5, dadurch gekennzeichnet, daß der untere Preßling (10) in der Bohrung (11) verschiebbar angeordnet ist.

7. Ringspaltdüse nach Anspruch 5, dadurch gekennzeichnet, daß der untere Preßling in der Bohrung (11) eingepreßt ist und der obere Preßling (9) am Verbindungsteil (6) verschiebbar gelagert ist, so daß seine oberste Position zum Boden (1) durch einen Anschlag (14) am Verbindungsteil (6) und seine unterste Position durch Aufsetzen seiner unteren Kante (7) auf dem Boden (1) gegeben sind.

8. Ringspaltdüse nach Anspruch 1, dadurch gekennzeichnet, daß der zwischen den Preßlingen (9) und (10) begrenzte Umlenkraum (3) zum Umlenken des Stromes des Mediums um mehr als 90° ausgebildet ist.

9. Verwendung der Ringspaltdüse nach einem der Ansprüche 1—9 am Boden eines Fließbetttrockners.

**Claims**

1. Ring-gap nozzle on a bottom plate (1) for distributing a flowing medium over this plate, which has, passing through the plate, an axial channel (2) which is covered by a cap so as to leave a ring gap (4) between the cap and the plate, whilst the cap is held by means of a connecting member (6) which passes coaxially through the channel and is attached to a clamp (5) which is mounted at the start of the channel, in the direction of a flow of the medium, thus forming a flow space, in which the medium flowing axially in the channel region is deflected in a deflection space (3) and flows out through the ring gap, all walls bounding the flow space being so constructed that the cross-section of the flooded area of the annular flow space continuously decreases in the direction of the flow of the medium towards the outlet edge (7) of the ring gap (4), beginning at least in the deflection space (3) of the flow space, characterised in that the flow space, i. e. the channel (2) and the deflection space (3), is bounded by the walls of two dish-shaped pressed parts (9 and 10) which are complementarily shaped and nested into each other and which are arranged in the region of a hole (11) through the bottom plate (1) and held spaced from one another, the upper pressed part (9) having a larger diameter than the hole (11) and the lower pressed part (10) fitting into the hole (11).

2. Ring-gap nozzle according to Claim 1, characterized in that the lower pressed part (10) bounding the channel (2) is provided with a clamp (5) to retain the connecting member.

3. Ring-gap nozzle according to Claim 2, characterised in that the distance between the lower pressed part (10) and the upper pressed part (9) bounding the deflection space (3) is determined by a sleeve (12) which is arranged around the connecting member (6) and between the clamp (5) and the upper pressed part (9).

4. Ring-gap nozzle according to Claim 3, characterised in that the sleeve (12) is provided with an arched wall (13) which extends from the connecting member (6) to the inner wall of the upper pressed part (9) thus bounding a part of the deflection space (3).

5. Ring-gap nozzle according to Claim 1, characterised in that the lower pressed part (10) after being inserted into the hole (11) is held fixed.

6. Ring-gap nozzle according to Claim 5, characterised in that the lower pressed part (10) is removably arranged in the hole (11).

7. Ring-gap nozzle according to Claim 5, characterised in that the lower pressed part is press-fitted into the hole (11) and the upper pressed part (9) is removably mounted on the connecting member (6) in such a way that its upper position relatively to said plate (1) is determined by a limit stop (14) provided on the connecting member (6) and its lower position by contact of its lower outlet edge (7) on the plate (1).

8. Ring-gap nozzle according to Claim 1, characterised in that the deflection space (3) between pressed parts (9) and (10) is constructed to deflect the flow of the medium by more than 90°.

9. Use of the ring-gap nozzle according to any one of Claims 1 to 8 on the bottom plate of a fluidised bed dryer.


## Revendications

1. Buse à fente annulaire, placée sur un fond (1), destinée à la répartition d'un courant de fluide au-dessus de ce fond et comportant un canal axial (2) qui traverse ce fond, le fond étant recouvert d'un chapeau laissant libre une fente annulaire (4) entre le chapeau et le fond, le chapeau étant maintenu au moyen d'une pièce de liaison (6), logée à travers le canal et dans son axe et fixée dans un support (5) placé dans le sens du courant au commencement du canal, ce qui forme un espace d'écoulement, dans lequel le courant de fluide s'écoulant axialement dans la zone du canal est dévié dans un espace de déviation (3) et sort par la fente annulaire, cependant que toutes les parois délimitant l'espace d'écoulement sont formées de manière que la section transversale de la surface — parcourue par le fluide — de l'espace d'écoulement annulaire diminue continuellement dans la direction du courant de fluide, vers le bord de sortie (7) de la fente annulaire (4), au moins à partir de l'espace de déviation (3) de l'espace d'écoulement caractérisé en ce que l'espace d'écoulement, c'est-à-dire le canal (2) et l'espace de déviation (3), est délimité par des parois de deux pièces moulées concaves (9 et 10), complémentaires l'une de l'autre et imbriquées l'une dans l'autre, qui sont placées dans la zone d'un trou (11) traversant le fond (1) et maintenues à une certaine distance l'une de l'autre, la pièce moulée supérieure (9) ayant un diamètre plus grand que le trou (11) et la pièce moulée inférieure (10) s'enfichant dans le trou (11).

2. Buse à fente annulaire suivant la revendication 1, caractérisée en ce que la pièce moulée inférieure (10), qui délimite la canal (2), présente un support (5) pour le maintien de la pièce de liaison (6).

3. Buse à fente annulaire suivant la revendication 2, caractérisée en ce que la distance entre la pièce moulée inférieure (10) et la pièce moulée supérieure (9) délimitant l'espace de déviation (3) est déterminée au moyen d'un manchon (12), qui est placé autor de la pièce de liaison (6) ainsi qu'entre le support (5) et la pièce moulée supérieure (9).

4. Buse à fente annulaire suivant la revendication 3 caractérisée en ce que le manchon (12) présente une paroi voûtée (13), qui va de la pièce de liaison (6) à la paroi intérieure de la pièce moulée supérieure (9) et contribue ainsi à délimiter un tronçon de l'espace de déviation (3).

5. Buse à fente annulaire suivant la revendication 1, caractérisée en ce que la pièce moulée inférieure (10) est fixée d'une manière inamovible, une fois qu'elle a été enfichée dans le trou (11).

6. Buse à fente annulaire suivant la revendication 5, caractérisée en ce que la pièce moulée inférieure (10) est placée mobile dans le trou (11).

7. Buse à fente annulaire suivant la revendication 5, caractérisée en ce que la pièce moulée inférieure est emmanchée dans le trou (11) et que la pièce moulée supérieure (9) est logée mobile sur la pièce de liaison (6), de sorte que sa position la plus haute par rapport au fond (1) est déterminée par une butée (14), qui est sur la pièce de liaison (6) et que sa position la plus basse est déterminée par l'appui de son bord inférieur (7) sur le fond (1).

8. Buse à fente annulaire suivant la revendication 1, caractérisée en ce que l'espace de déviation (3) délimité entre les pièces moulées (9) et (10) et destiné à la déviation du courant de fluide est conforme à un angle supérieur à 90°.

9. Utilisation de la buse à fente annulaire suivant une des revendications 1 à 9 sur le fond d'un séchoir à lit fluidisé.

FIG.1

FIG.2

FIG.3